Europäisches Patentamt

European Patent Office

Office européen des brevets

(19)

(11) **EP 1 257 105 A2**

(12) **EUROPEAN PATENT APPLICATION**

(43) Date of publication:
**13.11.2002 Bulletin 2002/46**

(51) Int Cl.⁷: **H04L 27/26**, H04L 25/03

(21) Application number: **02253216.2**

(22) Date of filing: **08.05.2002**

(84) Designated Contracting States:
**AT BE CH CY DE DK ES FI FR GB GR IE IT LI LU MC NL PT SE TR**
Designated Extension States:
**AL LT LV MK RO SI**

(30) Priority: **10.05.2001 US 289822 P**
**21.12.2001 US 24281**

(71) Applicant: **Industrial Technology Research Institute**
**Chutung, Hsinchu (TW)**

(72) Inventors:
• **Wang, Chih-Chi**
**Tan-Tsu 427, Taichung, Taiwan (CN)**
• **Wu, An-Yeu**
**Taipei, Taiwan (CN)**
• **Wang, Bor-Min**
**Chu-Tung, Hsin-Chu, Taiwan (CN)**

(74) Representative: **Smith, Samuel Leonard**
**J.A. Kemp & Co.,**
**14 South Square,**
**Gray's Inn**
**London WC1R 5JJ (GB)**

(54) **Equalization for ADSL using a mixed time domain and frequency domain approach**

(57)    A method for training a time-domain equalizer having at least one coefficient that includes estimating a channel, initializing the at least one coefficient of the time-domain equalizer, updating the at least one coefficient of the time-domain equalizer with the estimated channel, retaining the updated estimated channel, fixing the updated value of the at least one coefficient of the time-domain equalizer for at least a one-symbol duration, calculating a modulated symbol based on an output of the time-domain equalizer, calculating a second value for the estimated channel based on the modulated symbol, setting the estimated channel to the second value, and repeating the step of updating the time-domain equalizer through the step of setting the estimated channel to the second value until a predetermined condition has been met.

Fig. 5

**EP 1 257 105 A2**

**Description**

This invention pertains in general to a Discrete Multi-Tone (DMT) modulation/demodulation technique for the Asymmetric Digital Subscriber Line (ADSL) technology and, more particularly, to an improved Time-domain Equalizer (TEQ) algorithm for the DMT modulation/demodulation technique.

The Asymmetric Digital Subscriber Line (ADSL) technology enables high speed transmission of data over existing twisted-pair copper telephone lines, and provides the necessary bandwidth for fast access to the Internet and improved performance of other applications such as video conferencing. ADSL systems implement a number of modulation/demodulation schemes, and the ANSI T1 committee has made the Discrete Multi-Tone (DMT) algorithm the standard modulation/demodulation scheme for ADSL systems. The DMT algorithm divides, in the frequency domain, an available broadband channel into a number of orthogonal sub-channels. The standard ANSI ADSL system provides 256 frequency channels for downstream data and 32 channels for upstream data.

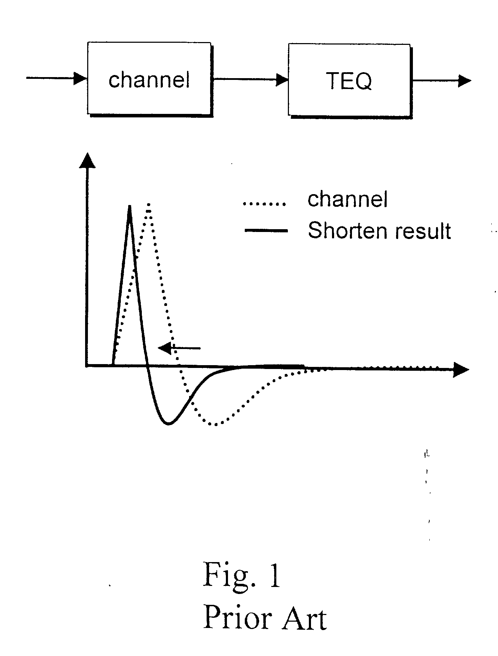

A DMT transceiver that executes the DMT algorithm implements channel equalization through a Time-domain Equalizer (TEQ) and a Frequency-domain Equalizer (FEQ). Data are encoded and modulated with fast Fourier transform (FFT), and demodulated with inverse FFT (IFFT). Every transformed symbol of the data consists of N samples and includes a cyclic prefix (CP) 1/16 symbols in length. The CP separates the symbols in time to eliminate Inter-Symbol Interference (ISI). However, the CP also decreases the data bit rate of the system. Figure 1 shows an implementation of a TEQ, also referred to as a Shortened Impulse Response Filter, to a channel and the resultant channel response. The TEQ is implemented in a DMT transceiver to shorten the channel response to a pre-defined length. At the output of the TEQ, linear convolution of processed signals and an equalized channel may be represented mathematically as circular convolution. The frequency response of the equalized channel is compensated by multiplying each of the FFT coefficients with the inverse of the channel response.

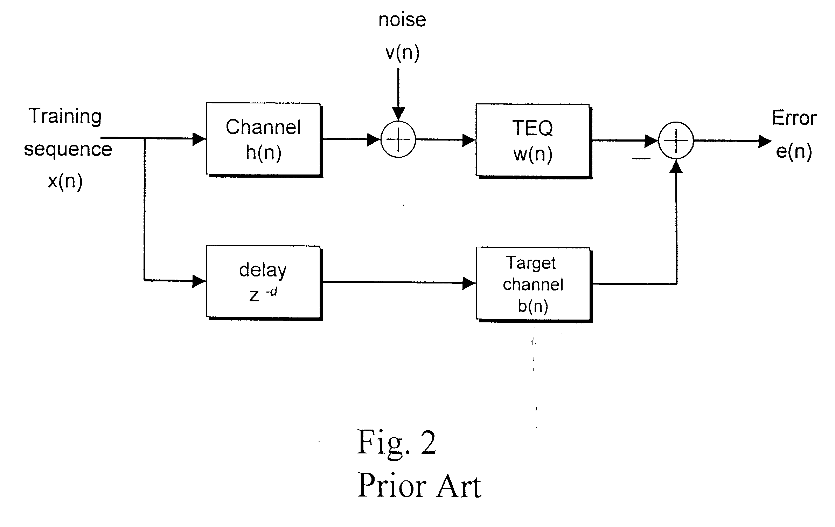

[004] Fig. 2 shows a block diagram of a known TEQ training algorithm. Referring to Fig. 2, h(n) and w(n) represent coefficients of a channel and the TEQ, respectively. The target channel is an arbitrary Finite Impulse Response (FIR) filter having $v + 1$ taps and a coefficient b(n). The goal of the TEQ is to equalize the channel so that the cascade of h(n) and w(n) equals b(n) as shown by the following equation:

$$h(n)*w(n) = \delta(n - d)*b(n)$$

The parameter d represents channel delay.

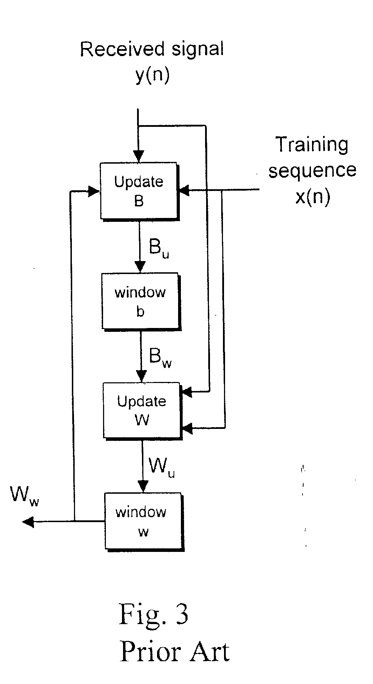

TEQ training algorithms may be divided into one of two categories -- off-line and on-line. Off-line training algorithms require complex matrix computations and therefore are generally more complex than on-line training algorithms. Thus, on-line training algorithms are considered more suitable for practical implementations. Frequency-domain Least-Mean-Square (FLMS) and Time-domain LMS (TLMS) algorithms are examples of on-line training algorithms. Each of FLMS and TLMS algorithm incorporates an LMS algorithm to estimate TEQ coefficients as data are received. In the FLMS algorithm, coefficients of a target channel and the TEQ are updated simultaneously in the frequency domain for each DMT training symbol. Fig. 3 is a block diagram of the FLMS algorithm. Referring to Fig. 3, X(k) and Y(k) represent the FFT of the received symbol, y(n), and training symbol, x(n), respectively, wherein k = 0 to N-1. $W_i$(k) and $B_i$(k) are FFT coefficients of w(n) and b(n), respectively, in the frequency domain after the $i^{th}$ update. For each symbol, the training algorithm performs the following in the frequency domain:

$$E(k) = B_i(k)X(k) - W_i(k)Y(k)$$
$$B_{i+1}(k) = B_i(k) + \mu_b E(k)X*(k) \qquad For K = 0, 1, ... N - 1$$
$$W_{i+1}(k) = W_i(k) + \mu_w E(k)Y*(k)$$

B(k) and W(k) are then transformed and demodulated to the time domain and windowing is performed after each update. In other words, the principle updating process of the FLMS algorithm is to update in the frequency domain and window in the time domain. To operate in the frequency domain, however, the FLMS algorithm requires several FFT/IFFT transform calculations to transform the coefficients between time and frequency domains. As a result, the FLMS algorithm is very complex.

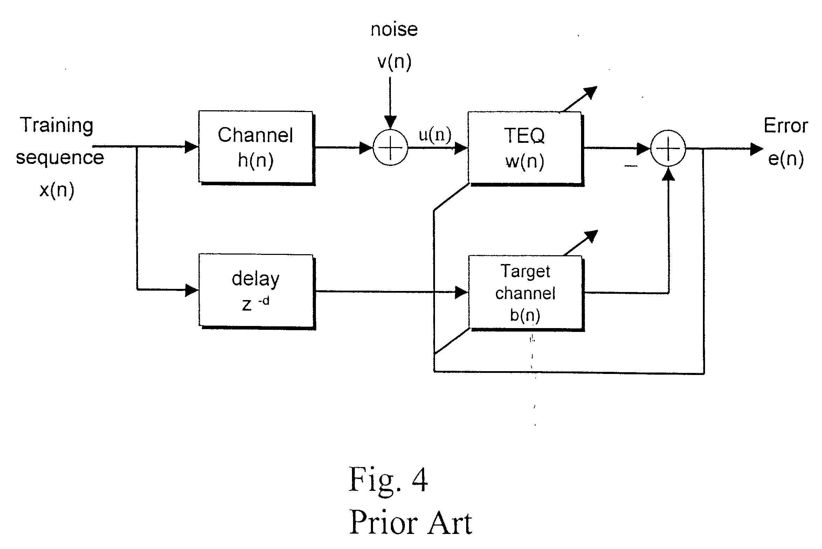

In contrast, the TLMS algorithm updates b(n) and w(n) simultaneously in the time domain. Fig. 4 is a block diagram of the TLMS algorithm. Referring to Fig. 4, the TEQ and the target channel are L-tap and (v + 1)-tap FIR filters, respectively. The TLMS algorithm incorporates the LMS algorithm to update coefficients of w(n) and b(n) simultaneously. At the beginning of the TEQ training sequence, the coefficients of w(n) and b(n) are set to initial values, and the following calculations are performed on each incoming sample:

$$e(n) = b_n^T x_n - w_n^T y_n$$

$$b_{n+1} = b_n - \mu_b e(n) x_n$$

$$w_{n+1} = w_n + \mu_w e(n) y_n$$

If the step sizes, $\mu_b$ and $\mu_w$, and the initial values of w(n) and b(n) are chosen properly, the coefficients of TEQ and target channel will converge to the target solution quickly.

In general, the TLMS algorithm converges faster than the FLMS algorithm. However, the TLMS updating procedures are performed for every sample, and therefore the algorithm is still very complex, especially for a long-tap TEQ.

In accordance with the invention, there is provided a method for training a time-domain equalizer having at least one coefficient that includes estimating a channel, initializing the at least one coefficient of the time-domain equalizer, updating the at least one coefficient of the time-domain equalizer with the estimated channel, retaining the updated estimated channel, fixing the updated value of the at least one coefficient of the time-domain equalizer for at least a one-symbol duration, calculating a modulated symbol based on an output of the time-domain equalizer, calculating a second value for the estimated channel based on the modulated symbol, setting the estimated channel to the second value, and repeating the step of updating the time-domain equalizer through the step of setting the estimated channel to the second value until a predetermined condition has been met.

In one embodiment, the step of updating the time-domain equalizer includes updating the time-domain equalizer with a least-mean-square algorithm.

In another embodiment, there includes a step of fixing the updated value of the at least one coefficient of the time-domain equalizer for at least a two-symbol duration.

Also in accordance with the present invention, there is provided an asymmetric digital subscriber line system including a transmitted signal having a plurality of training symbols that includes a channel for receiving the transmitted signal, a target channel for receiving the transmitted signal, a first mixer coupled to the channel for receiving an output of the channel, a time-domain equalizer coupled to the first mixer to receive an output of the first mixer, the time-domain equalizer including a plurality of coefficients, a first modulator coupled to the time-domain equalizer to provide a first modulated signal, a channel estimator, coupled to the first modulator to receive the first modulated signal, providing an estimated channel to the target channel, and a second mixer, coupled to receive the output of the time-domain equalizer and an output of the target channel, providing an output to the time-domain equalizer.

In one embodiment, the first modulator includes a first encoder coupled to received an output of the time-domain equalizer, and a first Fast Fourier Transform means coupled to the first encoder to provide the first modulated signal.

In another embodiment, the first mixer provides circular convolution between the channel and the training symbols of the transmitted signal.

In yet another embodiment, the channel estimator delays the estimated channel by at least one symbol.

In still another embodiment, the channel estimator delays the estimated channel by at least two symbols.

Additionally in accordance with the present invention, there is provided a discrete multi-tone transceiver that includes a channel estimator for receiving a first modulated signal and a second modulated signal, including a first calculating means for estimating an effective channel in the frequency domain based on the first and second modulated signals, an inverse Fast Fourier Transform means coupled to the first calculating means for converting the effective channel to the time domain, and a rectangular windowing means coupled to the inverse Fast Fourier Transform means for providing a rectangular windowing function on the effective channel in the time domain to limit the estimated channel to v+1 samples.

In one embodiment, the first calculating means includes a divider for dividing the first modulated signal from the second modulated signal.

In another embodiment, the first calculating means includes a memory for storing an inverse value of the second modulated signal, and a multiplier for multiplying the first modulated signal with the inverse of the second modulated signal.

In accordance with the present invention, there is additionally provided a method for training a time-domain equalizer having at least one coefficient that includes receiving a first modulated signal, receiving a second modulated signal, estimating an effective channel in the frequency domain based on the first and second modulated signals,

converting the effective channel to the time domain, and rectangular windowing of the effective channel in the time domain to limit the estimated channel to v+1 samples.

In one embodiment, there also includes a step of normalizing an energy of the estimated channel in the time domain.

Additional objects and advantages of the invention will be set forth in part in the description which follows, and in part will be obvious from the description, or may be learned by practice of the invention. The objects and advantages of the invention will be realized and attained by means of the elements and combinations particularly pointed out in the appended claims.

It is to be understood that both the foregoing general description and the following detailed description are exemplary and explanatory only and are not restrictive of the invention, as claimed.

The accompanying drawings, which are incorporated in and constitute a part of this specification, illustrate several embodiments of the invention and together with the description, serve to explain the principles of the invention.

Figure 1 shows a known implementation of a TEQ and its effect on the channel response;

Figure 2 is a block diagram of an implementation of a TEQ training algorithm;

Fig. 3 is a block diagram of the FLMS algorithm;

Fig. 4 is a block diagram of the TLMS algorithm;

Fig. 5 is a block diagram consistent with one embodiment of the present invention;

Fig. 6 is a block diagram consistent with another embodiment of the present invention;

Fig. 7 is a block diagram of a channel estimator consistent with the present invention;

Fig. 8 is a diagram comparing the computational complexity of two known training algorithms with the TF-TEQ algorithm of the present invention; and

Fig. 9 is a block diagram showing a simulation environment for the present invention.

Reference will now be made in detail to the present embodiments of the invention, examples of which are illustrated in the accompanying drawings. Wherever possible, the same reference numbers will be used throughout the drawings to refer to the same or like parts.

The present invention is directed to an on-line TEQ training algorithm implemented in mixed time and frequency domains and is hereinafter referred to as the Time-and-Frequency domain TEQ (TF-TEQ) algorithm. The first step of the TF-TEQ algorithm estimates a channel h(n) and initializes TEQ coefficients w(n) to [1 0 0 ... 0]. The energy of the channel $E_{ch}$ is also calculated. The next step of the TF-TEQ algorithm is to update the TEQ using an LMS algorithm. A temporary vector **b_tmp** is provided to retain updated estimated channel $h_{est}$ (n). The TF-TEQ algorithm then fixes the TEQ coefficients w(n) for the duration of one DMT symbol while the DMT symbol is provided to the TEQ. A modulated symbol, Y(k), and the estimated channel $h_{est}$ (n) are calculated. The temporary vector **b_temp** is set to equal to $\mathbf{h}_{est}$, wherein $\mathbf{h}_{est}$ is the matrix of $h_{est}$ (n). The TF-TEQ algorithm of the present invention is then repeated starting from the step of updating the TEQ until predetermined design criteria have been met.

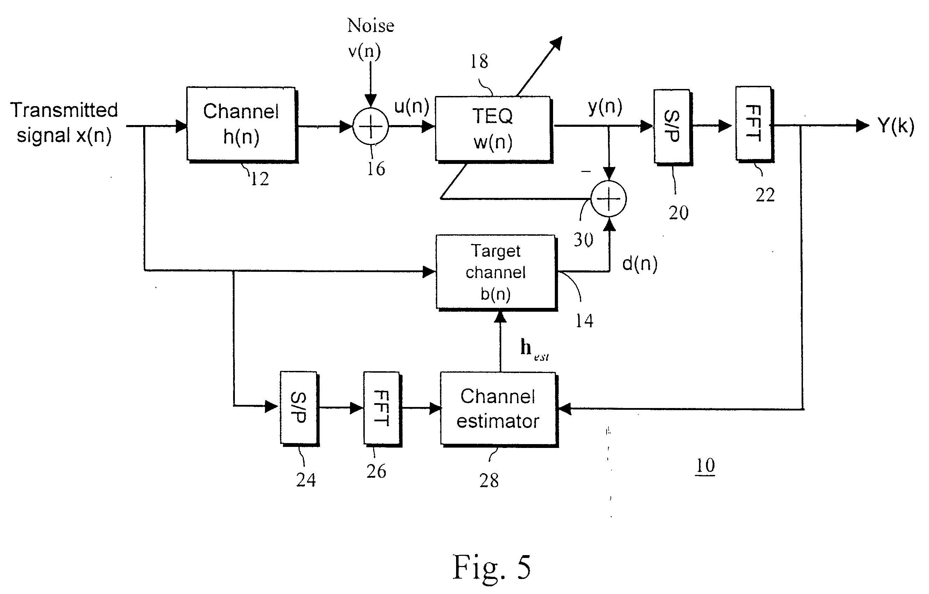

Fig. 5 is a block diagram consistent with one embodiment of the present invention. Referring to Fig. 5, a DMT transceiver 10 includes a channel 12 and a target channel 14. A transmitted signal x(n) is received by channel 12 and target channel 14. Channel 12 is coupled to a first mixer 16 that receives an output of channel 12 and white noise v (n). First mixer 16 is coupled to a TEQ 18 that provides an output y(n) to a first serial to parallel encoder (S/P) 20 and a second mixer 30. First S/P 20 is coupled to a first Fast Fourier Transform (FFT) 22 that provides a modulated output Y(k). A feedback loop is created between TEQ 18 and second mixer 30. Second mixer 30 receives the output y(n) of TEQ 18 and substrates the output y(n) from an output d(n) of target channel 14. Second mixer 30 then provides the result to TEQ 18.

DMT transceiver 10 also includes a second S/P 24 that received the transmitted signal x(n). Second S/P 24 is coupled to a second FFT 26 coupled to a channel estimator 28. Second FFT provides a modulated output XLK. Channel estimator 28 receives the outputs of first FFT 22 and second FFT 26, and provides an output $h_{est}$ to target channel 14.

In operation, a transmitter (not shown) sends the transmitted signal x(n), which includes a plurality of repeating training symbols to channel 12, wherein n = 0 to N-1, and N represents the number of samples. The repeating symbols form a periodic signal. Circular convolution of the transmitted signal is performed with channel 12, which may be represented mathematically as h(n). The output u(n) of first mixer 16 is obtained from circular convolution of the transmitted signal and the channel, and the addition of the white noise v(n) as follows:

$$u(n) = h(n) \otimes x(n) + v(n)$$

Channel estimator 28 performs an immediate estimation of an effective channel $h_{eff}$ for each update to expedite convergence to the effective channel, which may be obtained from circular convolution of the channel and coefficients of TEQ 18 as follows:

$$h_{eff}(n) = h(n)_{est} \otimes w(n)$$

The estimated channel $h(n)_{est}$ provided by channel estimator 28 is obtained by setting the coefficients of the target channel to $h(n)_{est}$, and then applying the LMS algorithm to update the TEQ coefficients $w(n)$ according to the updated coefficient $h_{est}(n)$. Channel estimator 28 therefore provides a close estimation of the effective channel to increase the rate of convergence.

An adaptive filtering algorithm is used to train TEQ 18 according to known training sequences to provide the equalized signal $y(n)$. As shown by the following equation, the equalized signal $y(n)$ is obtained as the circular convolution between the effective channel $h_{eff}$ and the training symbols $x(n)$, and the addition of the white noise $v(n)$.

$$y(n) = h_{eff}(n) \otimes x(n) + v(n)$$

The estimation of the effective channel $h_{eff}$ should ideally be performed where $w(n)$ is fixed. However, when the adaptive filtering algorithm is used to train TEQ 18, $w(n)$ varies with time. Hence, the training of the present invention is divided into two contiguous phases: channel-estimating and channel-updating. Each phase lasts for a duration of one DMT symbol. At the channel-estimating phase, the TEQ coefficients are fixed for the duration of filtering one DMT symbol, or 512 samples according to the ADSL standards. At the end of the channel-estimating phase, channel estimator 28 calculates an estimated channel $h_{est}(n)$. Referring again to Fig. 5, the equalized signal $y(n)$ is provided by TEQ 18 to first S/P 20, which is coupled to first FFT 22. After FFT, the equation for obtaining the equalized signal $y(n)$ becomes

$$Y(k) \cong H_{eff}(k)X(k)$$

wherein $Y(k)$, $H_{eff}(k)$, and $X(k)$ are the FFT of $y(n)$, $h_{eff}(n)$, and $x(n)$, respectively. The Fast Fourier Transform of $v(n)$ is negligible when the transformed equalized signal $Y(k)$ is observed over a long period of time. The FFT/IFFT calculations may be carried out with existing embedded FFT/IFFT modules to further simplify the implementation of the present invention. The effective channel may therefore be estimated as follows:

$$H_{eff}(k) = Y(k)/X(k)$$

After channel estimator 28 calculates the estimated channel $h_{est}(n)$, TEQ 18 enters the channel-updating phase.

TEQ 18 is updated sample-by-sample, and the LMS algorithm is performed on each sample. In one embodiment, TEQ 18 is an L-tap adaptive FIR filter. Referring to Fig. 5, the output of target channel 14 during the channel-updating phase is $d(n)$ for n = 0, 1 ... 511. The tap-input vector $u(n)$ of TEQ 18 at time n may be represented as follows:

$$u(n) = [u(n)u(n - 1) \ldots u(n - L + 2) \, u(n-L+1)]^T$$

Therefore, the weight of the L-tap FIR filter may be updated for every sample by using the LMS algorithm as follows:

$$e(n) = d(n) - y(n)$$

$$d(n) = x^T(n)b$$

$$y(n) = u^T(n)w(n)$$

$$e(n) = d(n) - u^T(n)w(n)$$

$$w(n+1) = w(n) + \mu_w u(n)e^*(n)$$

wherein $\mathbf{w}(n) = [w_0(n)\ w_1(n)\ ...\ w_{L-1}(n)]^T$ represents the tap-weight vector of the TEQ at time n; and $\mathbf{x}(n) = [x(n-v)x(n-v+1)\ ...\ x(n)]^T$ represents the tap-input of the target channel. At the beginning of the training phase, parameters $\mathbf{w}$, $\mathbf{b}$, and step size, $\mu_w$, should be set to proper initial values according to the design criteria. Therefore, TEQ 18 will be updated 512 times before entering the channel-estimating phase for a different sample.

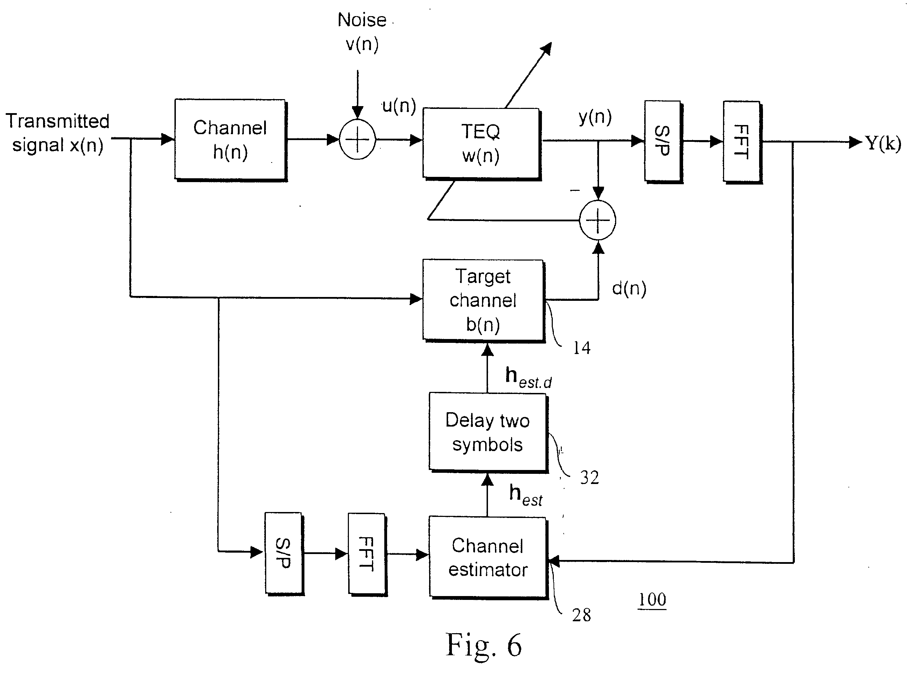

As described above, the estimated result, $h_{est}(n)$, is used immediately for the subsequent channel-updating phase. Therefore, real-time processing may be difficult to achieve because the duration of the operation of channel estimator 28 is only one sample. Fig. 6 is a block diagram of a DMT transceiver 100 consistent with another embodiment of the present invention. Referring to Fig. 6, the TF-TEQ algorithm is modified to provide a delay for practical implementation. DMT transceiver 100 is identical to DMT transceiver 10 shown in Fig. 5, except DMT 100 includes an additional delay circuit 32. The coefficients b(n) of target channel 14 are set to $h_{est,d}(n)$. Delay circuit 32 provides $h_{est,d}(n)$ for the last estimation of the effective channel, wherein the subscript d represents a delay coefficient. As an example, delay circuit 32 provides a delay of two symbols. Therefore, the duration of channel estimator 28 operation is extended to two DMT symbols because the effective channel is estimated for every two symbols. This eases the design of channel estimator 28 and allows the TF-TEQ algorithm of the present invention to be even more easily implemented.

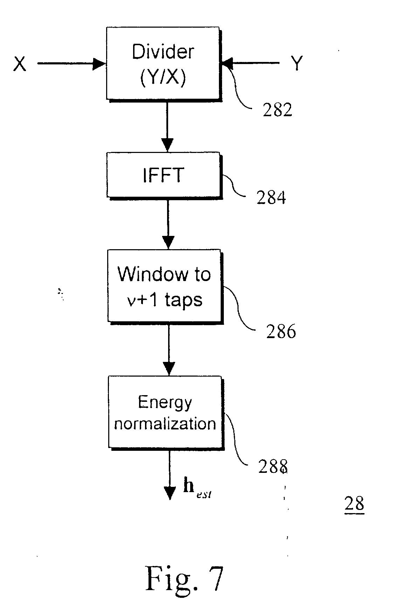

Fig. 7 shows an embodiment of channel estimator 28 consistent with the present invention. Referring to Fig. 7, channel estimator 28 includes a divider 282 coupled to an inverse FFT (IFFT) 284. Divider 282 receives Y(k) and X(k) as inputs and performs a division operation Y(k)/X(k) on an element-by-element basis. The result is an estimation of the effective channel in the frequency domain. To ascertain the estimated channel in the time domain, IFFT 284 performs inverse Fast Fourier Transform on the result. A calculating means 286 is coupled to IFFT 284 to receive the output of IFFT 284 and performs a rectangular windowing function to limit the estimated result to $v + 1$ samples. Rectangular windowing function can be easily implemented because it retains samples inside the window and forces those outside the window to a value of zero. Calculating means 286 then provides the windowed result to another calculating means 288 to normalize the energy of $h(n)_{est}$ to a preset value. Calculating means 288 is provided to avoid obtaining a trivial result where $w(n) = h_{est}(n) = [0,0...0]$.

Channel estimator 28 may also be implemented without divider 282. Because X(k) is known prior to the TEQ training, the value of 1/X(k) may be stored in a memory prior to the initiation of the algorithm. The mathematical calculation of dividing Y(k) with X(k) may therefore be carried out as a multiplication of Y(k) and 1/X(k). Channel estimator 28 may therefore be implemented with a multiplier instead of a divider, which is more complex to implement.

Table 1 summarizes the number of multiplications that the TF-TEQ algorithm of the present invention requires.

| Phase | Operation | Num. of multiplications |
|---|---|---|
| Channel-updating phase | $y = u * w$ | LN real |
| | $w = w + \mu e^* u$ | LN real |
| | $d = x * \tilde{h}_{eff}$ | $(v + 1)N$ real |
| Channel-estimating phase | $y = u * w$ | LN real |
| | $y \xrightarrow{FFT} Y$ | $\dfrac{N}{2}\log_2 N$ complex |
| | $H_{est} = \dfrac{Y}{X}$ | N complex |
| | $H_{est} \xrightarrow{IFFT} h_{est}$ | $\dfrac{N}{2}\log_2 N$ complex |

Table 1

Because the number of multiplications is evaluated for two training symbols from the channel-updating and channel-estimating phases, the number of multiplications for each training symbol is halved. The total number of multiplications for two symbols is 60,416, or 30,208 per symbol.

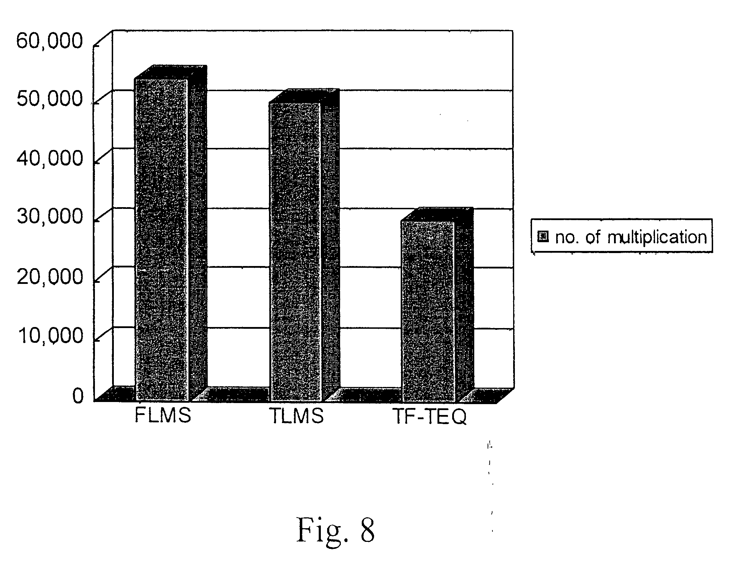

Fig. 8 is a diagram comparing the computational complexity of the known FLMS and TLMS algorithms with the TF-TEQ algorithm of the present invention. Referring to Fig. 8, the FLMS algorithm clearly is the most complex while the TF-TEQ algorithm is the least complex.

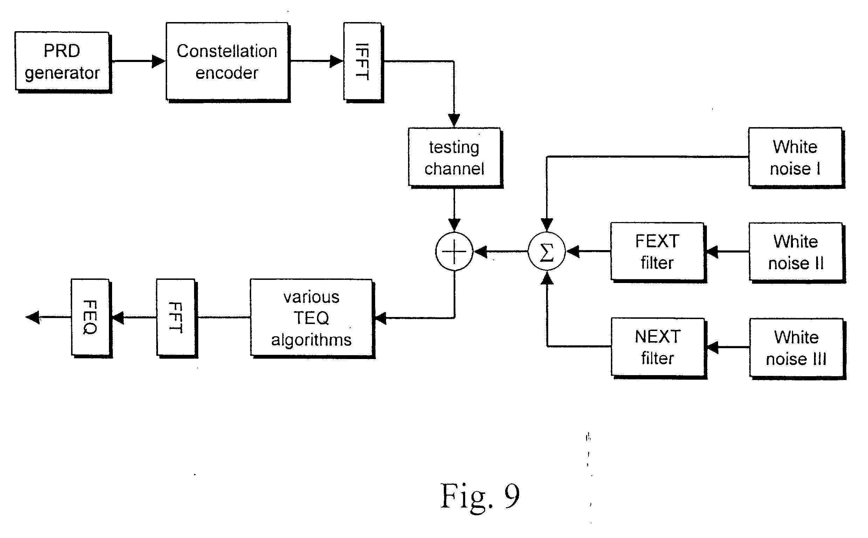

In addition, several computer simulations have been performed to show the performance of the TF-TEQ algorithm of the present invention. Fig. 9 is a block diagram of the simulation environment. All of the simulations focused on receiver training at a remote site. The size of the FFT was 512 and the length of CP, $v$, was 32 samples as defined by the ADSL standards. During signal transmission, the channel was injected with several noise sources such as Additive White Gaussian Noise (AWGN) and cross-talk noise. For purposes of the present simulations, only Far-end Cross-talk (FEXT), Near-end Cross-talk (NEXT), and AWGN were taken into consideration. Because of the finite number of taps, the TEQ generally cannot perform precise shortening of a channel response. Therefore, some energy will lie outside the largest ($v + 1$) contiguous samples of the effective channel, $h_{eff}(n)$, which is the cascade of the channel response and TEQ. A performance index, Shortened Signal-to-Noise Ratio (SSNR), is defined as follows to gauge the performance of the TF-TEQ algorithm of the present invention.

$$SSNR = 10\log_{10}\{\frac{E_{in}}{E_{leakage}}\}$$

$E_{in}$ represents the highest energy of the contiguous v+1 sample, and $E_{leakage}$ represents the energy of the samples outside the window. SSNR values represent the performance of the algorithms in the time-domain, and the greater the SSNR values, the better the performance.

Table 2 shows the SSNR values for eight test channels, or loops, after 500 training symbols for the FLMS, TLMS, and TF-TEQ algorithms. From the table, the TLMS algorithm performed well for some of the loops. Although the FLMS algorithm performed well for some of the loops, it also performed the worst for some other loops. In contrast, the TF-TEQ algorithm of the present invention performed well and consistently for all of the loops.

Table 2

| Channel | Before shortened | FLMS | TLMS | TF-TEQ |
|---|---|---|---|---|
| T1.601 Loop#7 | 20.73 | 25.6 | 42.9 | 41.2 |
| T1.601 Loop#9 | 19.78 | 35.1 | 38.2 | 39.0 |
| T1.601 Loop#13 | 19.65 | 25.8 | 41.6 | 41.7 |
| CSA Loop#4 | 17.51 | 38.3 | 42.0 | 37.2 |
| CSA Loop#6 | 21.32 | 47.6 | 47.8 | 45.8 |
| CSA Loop#7 | 19.08 | 34.4 | 46.0 | 37.5 |
| CSA Loop#8 | 19.41 | 28.1 | 51.9 | 42.2 |
| Mid CSA loop | 22.83 | 45.7 | 45.2 | 42.1 |

In addition to the SSNR values, the performance of the algorithms, in combined TEQ and FEQ, may also be evaluated in the frequency domain with SNR values. The SNR values of each sub-channel are obtained by computing the difference between the equalized output, Y(k), and the training symbol, X(k), as follows:

$$SNR_n = \frac{|X_n|^2}{|E_{avg,n}|^2}$$

wherein n represents the n-th sub-channel. The geometric SNR may be calculated as

$$SNR_{geom} \overset{\Delta}{=} \left[\prod_{k=0}^{N-1} SNR_k\right]^{\frac{1}{N}}$$

for n=0 to 255. In addition, the TEQ is trained with an on-line algorithm, followed by FEQ training. When the TEQ coefficients become available, the training symbols K are injected into the system, and an average error $E_{avg}$ is calculated for each sub-channel.

Table 3 shows the $SNR_{geom}$ values for eight test loops after 500 training symbols for the FLMS, TLMS, and TF-TEQ algorithms. The table shows that the loops cannot effectively shorten the channel response with the FLMS algorithm. This is due to the severe ISI, which prevents the FLMS algorithm from improving the SNR values effectively. The TF-TEQ algorithm of the present invention achieved better SNR values than the TLMS algorithms for most loops.

Although the TLMS algorithm appears to out-perform the TF-TEQ algorithm in the time domain for some of the loops, the TF-TEQ algorithm clearly provided superior performance to the TLMS algorithm in the frequency domain. Therefore, from both the SSNR and SNR values, the TF-TEQ algorithm has shown to be more robust than either of the TLMS or FLMS algorithm in the frequency domain. Therefore, the TF-TEQ algorithm of the present invention provides comparable, and often superior, performance than either of the known TLMS and FLMS algorithms in both the time and frequency domains at an added advantage of being less complex to implement than either of the FLMS or TLMS algorithm.

Table 3

| Channel | $SNR_{geom}$ before shortend | FLMS | TLMS | TF-TEQ |
|---|---|---|---|---|
| T1.601 Loop#7 | 18.557 | 29.220 | 31.814 | 34.641 |
| T1.601 Loop#9 | 19.630 | 36.679 | 29.712 | 35.846 |
| T1.601 Loop#13 | 18.603 | 31.737 | 35.507 | 37.940 |
| CSA Loop#4 | 24.697 | 44.748 | 40.522 | 39.474 |
| CSA Loop#6 | 25.124 | 48.972 | 43.282 | 47.467 |
| CSA Loop#7 | 23.846 | 38.734 | 42.147 | 40.823 |
| CSA Loop#8 | 20.946 | 36.044 | 45.253 | 43.248 |
| Mid CSA loop | 30.915 | 50.102 | 41.894 | 45.916 |

Other embodiments of the invention will be apparent to those skilled in the art from consideration of the specification and practice of the invention disclosed herein. It is intended that the specification and examples be considered as exemplary only, with a true scope and spirit of the invention being indicated by the following claims.

**Claims**

1. A method for training a time-domain equalizer having at least one coefficient, comprising:

estimating a channel;
initializing the at least one coefficient of the time-domain equalizer;
updating the at least one coefficient of the time-domain equalizer with the estimated channel;
retaining the updated estimated channel;
fixing the updated value of the at least one coefficient of the time-domain equalizer for at least a one-symbol duration;
calculating a modulated symbol based on an output of the time-domain equalizer;
calculating a second value for the estimated channel based on the modulated symbol;
setting the estimated channel to the second value; and
repeating the step of updating the time-domain equalizer through the step of setting the estimated channel to the second value until a predetermined condition has been met.

2. The method as claimed in claim 1, further comprising a step of calculating the energy of the channel.

3. The method as claimed in claim 1 or 2, wherein the step of updating the time-domain equalizer includes updating the time-domain equalizer with a least-mean-square algorithm.

4. The method as claimed in claim 1, 2 or 3 further comprising a step of fixing the updated value of the at least one coefficient of the time-domain equalizer for at least a two-symbol duration.

5. An asymmetric digital subscriber line system including a transmitted signal having a plurality of training symbols, comprising:

a channel for receiving the transmitted signal;
a target channel for receiving the transmitted signal;
a first mixer coupled to the channel for receiving an output of the channel;
a time-domain equalizer coupled to the first mixer to receive an output of the first mixer, the time-domain equalizer including a plurality of coefficients;
a first modulator coupled to the time-domain equalizer to provide a first modulated signal;
a channel estimator, coupled to the first modulator to receive the first modulated signal, providing an estimated channel to the target channel; and
a second mixer, coupled to receive the output of the time-domain equalizer and an output of the target channel, providing an output to the time-domain equalizer.

6. The system as claimed in claim 5, wherein the first modulator includes a first encoder coupled to received an output of the time-domain equalizer, and a first Fast Fourier Transform means coupled to the first encoder to provide the first modulated signal.

7. The system as claimed in claim 5 or 6, further comprising a second modulator coupled to receive the transmitted signal, the second modulator providing a second modulated signal.

8. The system as claimed in claim 7, wherein the second modulator includes

a second encoder for receiving the transmitted signal; and
a second Fast Fourier Transform means, coupled to the second encoder, providing the second modulated signal to the channel estimator.

9. The system as claimed in claim 7 or 8, wherein the channel estimator includes a divider for dividing the first modulated signal from the second modulated signal.

10. The system as claimed in claim 7, 8 or 9, wherein the channel estimator includes a memory for storing an inverse value of the second modulated signal.

11. The system as claimed in claim 7, 8, 9 or 10 wherein the channel estimator includes a multiplier for multiplying the first modulated signal with the inverse of the second modulated signal.

12. The system as claimed in any one of claims 5 to 11, wherein the first mixer providing circular convolution between the channel and the training symbols of the transmitted signal.

13. The system as claimed in any one of claims 5 to 12, wherein the second mixer providing circular convolution between the estimated channel and the coefficients of the time-domain equalizer.

14. The system as claimed in any one of claims 5 to 13, wherein the channel estimator delays the estimated channel by at least one symbol.

15. The system as claimed in any one of claims 5 to 14, wherein the channel estimator delays the estimated channel by at least two symbols.

16. The system as claimed in any one of claims 5 to 1-5, wherein the time-domain equalizer comprises an L-tap adaptive FIR filter.

17. A discrete multi-tone transceiver, comprising:

a channel estimator for receiving a first modulated signal and a second modulated signal, including

a first calculating means for estimating an effective channel in the frequency domain based on the first and second modulated signals,
an inverse Fast Fourier Transform means coupled to the first calculating means for converting the effective channel to the time domain, and
a rectangular windowing means coupled to the inverse Fast Fourier Transform means for providing a rectangular windowing function on the effective channel in the time domain to limit the estimated channel to v+1 samples.

**18.** The transceiver as claimed in claim 17, further comprising a second calculating means for normalizing an energy of the estimated channel.

**19.** The system as claimed in claim 17 or 18, wherein the first calculating means includes a divider for dividing the first modulated signal from the second modulated signal.

**20.** The system as claimed in claim 17, 18 or 19, wherein the first calculating means includes a memory for storing an inverse value of the second modulated signal, and a multiplier for multiplying the first modulated signal with the inverse of the second modulated signal.

**21.** A method for training a time-domain equalizer having at least one coefficient, comprising:

receiving a first modulated signal in the frequency domain;
receiving a second modulated signal in the frequency domain;
estimating an effective channel in the frequency domain based on the first and second modulated signals;
converting the effective channel to the time domain; and
rectangular windowing of the effective channel in the time domain to limit the estimated channel to v+1 samples.

**22.** The method as claimed in claim 21, further comprising a step of normalizing an energy of the estimated channel in the time domain.

**23.** The method as claimed in claim 21 or 22, wherein the step of estimating an effective channel comprises dividing the first modulated signal from the second modulated signal.

**24.** The method as claimed in claim 21, 22 or 23, wherein the step of estimating an effective channel comprises multiplying the first modulated signal with the inverse of the second modulated signal.

**25.** The method as claimed in any one of claims 21 to 24, wherein the step of estimating an effective channel is delayed for a duration of at least one symbol.

**26.** The method as claimed in any one of claims 21 to 25, wherein the step of estimating an effective channel is delayed for a duration of at least two symbols.

**27.** The method as claimed in any one of claims 21 to 26, further comprising a step of updating a plurality of coefficients of a time-domain equalizer with the windowed estimated channel in the time domain.

Fig. 1
Prior Art

Fig. 2
Prior Art

Fig. 3
Prior Art

Fig. 4
Prior Art

Fig. 5

Fig. 6

EP 1 257 105 A2

Divider (Y/X) — 282

IFFT — 284

Window to $v+1$ taps — 286

Energy normalization — 288

X, Y → $\mathbf{h}_{est}$

28

Fig. 7

Fig. 8

Fig. 9

EP 1 257 105 A2